(19) Europäisches Patentamt
European Patent Office
Office européen des brevets

(11) **EP 3 642 560 B1**

(12) **EUROPÄISCHE PATENTSCHRIFT**

(45) Veröffentlichungstag und Bekanntmachung des Hinweises auf die Patenterteilung:
**06.08.2025   Patentblatt 2025/32**

(21) Anmeldenummer: **18728879.0**

(22) Anmeldetag: **01.06.2018**

(51) Internationale Patentklassifikation (IPC):
***G01B 11/00*** *(2006.01)*

(52) Gemeinsame Patentklassifikation (CPC):
**G01B 11/002**

(86) Internationale Anmeldenummer:
**PCT/EP2018/064454**

(87) Internationale Veröffentlichungsnummer:
**WO 2018/234011 (27.12.2018 Gazette 2018/52)**

(54) **SYSTEM, VERFAHREN UND MARKER ZUR POSITIONSBESTIMMUNG EINES BEWEGLICHEN OBJEKTES IM RAUM**

SYSTEM, METHOD AND MARKER FOR THE DETERMINATION OF THE POSITION OF A MOVABLE OBJECT IN SPACE

SYSTÈME, PROCÉDÉ ET MARQUEUR POUR DÉTERMINER LA POSITION D'UN OBJET MOBILE DANS L'ESPACE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.06.2017   DE 102017113615**

(43) Veröffentlichungstag der Anmeldung:
**29.04.2020   Patentblatt 2020/18**

(73) Patentinhaber:
- **Carl Zeiss SMT GmbH**
  **73447 Oberkochen (DE)**
- **Carl Zeiss Industrielle Messtechnik GmbH**
  **73447 Oberkochen (DE)**

(72) Erfinder:
- **HORN, Jan**
  **80636 Muenchen (DE)**
- **HAVERKAMP, Nils**
  **73431 Aalen (DE)**
- **SCHNEIDER, Marc**
  **73432 Aalen (DE)**
- **TEUBER, Tanja**
  **73431 Aalen (DE)**
- **OMLOR, Lars**
  **Pleasanton, CA 94588 (US)**

(74) Vertreter: **Witte, Weller & Partner Patentanwälte mbB**
**Postfach 10 54 62**
**70047 Stuttgart (DE)**

(56) Entgegenhaltungen:
| | |
|---|---|
| EP-A1- 1 473 549 | WO-A1-2017/072281 |
| CN-A- 103 217 272 | DE-A1- 102009 009 372 |
| JP-A- H06 203 166 | US-A1- 2008 100 622 |

- **BI ET AL.: "Nan-Pattern Recognition and Correlation Technique for Sub-Nanometer In-Plane Displacement Measurement",** EXPERIMENTAL MECHANICS, vol. 50, 24 February 2010 (2010-02-24), pages 1169 - 1181, XP002784923

**Beschreibung**

Die vorliegende Anmeldung nimmt die Priorität der deutschen Patentanmeldung Nr. 10 2017 113 615.0, eingereicht am 20. Juni 2017, in Anspruch.

Die Erfindung betrifft ein System zur 6D-Positionsbestimmung eines mit 6 Freiheitsgraden beweglichen Objektes im Raum.

Die Erfindung betrifft ferner ein Verfahren zur 6D-Positionsbestimmung eines mit 6 Freiheitsgraden beweglichen Objektes im Raum.

Es gibt verschiedenste industrielle Anwendungen, in denen eine genaue Positionsbestimmung für eine Bewegungssteuerung eines Objektes erforderlich ist. Ein solches Objekt kann beispielsweise ein Roboterarm, beispielsweise bei der Spiegelherstellung sein, dessen 6-dimensionale (6D-) Position genau bekannt und gesteuert werden muss. Andere Anwendungsbeispiele betreffen die 6D-Positionssteuerung von beweglichen Spiegeln, beispielsweise in einer Projektionsbelichtungsanlage, um ein präzises Bild einer Retikelstruktur auf dem zu belichtenden Halbleitersubstrat zu erzeugen. Derzeitige Positionssteuerungen beruhen häufig auf klassischen Sensoren wie optischen Encodern, kapazitiven Sensoren, Wirbelstromsensoren.

Unter einer Position eines Objektes im Raum wird im Sinne der vorliegenden Erfindung eine Position gemäß N Freiheitsgraden der Bewegung verstanden, wobei N = 2, 3, 4, 5 oder 6 sein kann. Beispielsweise eine 6D-Position ist eine Position des Objektes im Raum gemäß 3 Freiheitsgraden der Translation und 3 Freiheitsgraden der Rotation. Der Begriff Position umfasst somit auch eine Orientierung des Objektes im Raum.

Aufgrund der in den vergangenen Jahren verbesserten Leistung von Bildsensoren kann eine Positionsbestimmung auch durch Bilderfassung des Objektes mit einer oder mehreren Kameras durchgeführt werden. In DE 10 2009 009 372 A1 wird eine Vorrichtung sowie ein Verfahren zur Überwachung der Orientierung mindestens eines Spiegels, beispielsweise in einer Projektionsbelichtungsanlage für die Mikrolithographie, vorgeschlagen, bei der eine Erfassungseinrichtung, die eine Kamera aufweist, ein von einer Musterquelle bereitgestelltes Muster mit räumlichen und/oder zeitlich variablen Lichtquellen, die von dem Spiegel auf die Erfassungseinrichtung gespiegelt werden, erfasst. Aus dem von der Erfassungseinrichtung erfassten Spiegelbild kann die Orientierung des Spiegels ermittelt werden. Das von der Musterquelle bereitgestellte Muster kann gemäß diesem Dokument ein Rauschmuster, d.h. ein durch einen Zufallsprozess erzeugtes Muster sein, wie beispielsweise Oberflächenbereiche von Komponenten in der Nähe des zu überwachenden Spiegels, beispielsweise lackierte oder strukturierte Oberflächen des Gehäuses einer Projektionsbelichtungsanlage oder dergleichen. Für den Mustervergleich, d.h. den Vergleich des in der Erfassungseinrichtung abgebildeten Musters mit dem ursprünglichen Muster, können unterschiedliche Verfahren der Bild- oder Mustererkennung oder vergleichbarer Verfahren, insbesondere korrelativer Verfahren, eingesetzt werden.

Obwohl die vorliegende Erfindung auch in Anwendungen einsetzbar ist, in denen eine sehr genaue Positionsbestimmung im Sub-Mikrometerbereich oder gar im Sub-Nanometerbereich erforderlich ist, ist die vorliegende Erfindung insbesondere für die Positionsbestimmung eines beweglichen Objektes in einem großen Arbeitsvolumen, beispielsweise einer Größe von 1 m$^3$, und mit großen Arbeitsabständen zwischen dem Messsystem und dem Objekt geeignet.

EP 1 473 549 A1 offenbart eine Vorrichtung zum Erfassen einer 2D-Position, um die Position eines ersten Elements bezüglich eines zweiten Elements zu messen. Eine 2D-Absolut-Skala umfasst ein 2D-Absolut-Skalenmuster, das sich über den 2D-Skalenbereich entlang jeder Messachse der Skala erstreckt. Das 2D-Absolut-Skalenmuster umfasst ein vorbestimmtes Quasi-Zufallsmuster, das mit einer Mehrzahl von Code-Abschnitten entlang jeder Achse verschachtelt ist. Jeder Code-Abschnitt umfasst eine Mehrzahl an Code-Elementen, die einen absoluten Messwert angeben.

WO 2017/072281 A1 offenbart ein Verfahren zum Steuern der Bewegungen von Gelenkarmen eines Industrieroboters durch ein Bewegungsvorgabemittel, wobei das Bewegungsvorgabemittel von einem Bediener in einer zur Referenzmarke vorgegebenen relativen Position gehalten wird und die Referenzmarke vom Bewegungsvorgabemittel erkannt und ggf. ausgelesen und dessen Distanz zur Referenzmarke gemessen wird. Die Position und Ausrichtung des Bewegungsvorgabemittels wird durch interne, bspw. Inertial-/Beschleunigungssensoren, oder durch externe Sensoren, bspw. 3D-Kamera, erfasst.

US 2008/0100622 A1 offenbart ein Verfahren zum Erfassen einer Oberfläche in einem Bewegungsbild, wobei die Oberfläche mit einem Muster bedeckt wird, die aus einem Markermaterial gebildet ist.

JPH06203166 offenbart ein Verfahren zum Messen der Position eines Objektes mittels drei oder mehr Kameras, wobei die erfasste Bildinformation einem neuronalen Netzwerk zugeführt wird.

Es ist eine Aufgabe der Erfindung, ein System und ein Verfahren zur Positionsbestimmung eines beweglichen Objekts im Raum bereitzustellen, mit denen insbesondere in großen Arbeitsvolumina mit großen Abständen zwischen Messsystem und Objekt eine möglichst genaue und zuverlässige Positionsbestimmung ermöglicht wird.

Erfindungsgemäß wird ein System gemäß Anspruch 1 zur 6D-Positionsbestimmung eines mit 6 Freiheitsgraden beweglichen Objektes im Raum bereitgestellt.

Weiterhin wird erfindungsgemäß ein Verfahren gemäß Anspruch 12 zur Positionsbestimmung eines mit 6 Freiheitsgraden beweglichen Objektes im Raum bereitgestellt.

Das erfindungsgemäße System und Verfahren sind Kamera-basiert realisiert. Das System und das Verfahren nutzen einen Marker, der am Objekt angebracht ist, um durch Bilderfassung des Markers die Position des Objektes zu ermitteln. Der Marker ist flächig ausgebildet und in eine Mehrzahl von einzelnen Feldern unterteilt, die jeweils ein statistisches Rauschmuster aufweisen. Die Rauschmuster können untereinander verschieden, aber auch identisch sein. Wenn sie verschieden sind, können sie beispielsweise durch ein korrelatives Verfahren von der Bildauswerteeinheit erkannt werden. Es versteht sich, dass das System und das Verfahren nicht nur einen Marker, sondern auch mehrere Marker verwenden können, die jeweils am Objekt an unterschiedlichen Stellen angebracht sind, und die jeweils in eine Mehrzahl von einzelnen Feldern mit unterschiedlichen Rauschmustern unterteilt sind. Das Bilderfassungssystem weist mehrere Kameras auf, insbesondere wenn das Objekt eine große Anzahl an Bewegungsfreiheitsgraden besitzt, sich beispielsweise um eine Achse um 360° drehen kann, wie dies beispielsweise bei einem Roboterarm einer Maschine der Fall sein kann.

Je nach Position des beweglichen Objektes und damit des Marker wird das Bild des Markers unter einem unterschiedlichen Blickwinkel der vorzugsweise raumfesten Bilderfassungseinheit erfasst, was zu geometrisch unterschiedlichen Bildern des Musters führt. Der Marker ist mit anderen Worten einer sich zeitlich verändernden Projektionstransformation unterworfen, wenn er beispielsweise auf einen Bildsensor abgebildet wird. In der Bildauswerteeinheit ist ein Referenzbild der Rauschmuster abgelegt, wobei das Referenzbild beispielsweise die "unverzerrte" Draufsicht auf den Marker darstellt. Die Bildaus werteeinheit ist nun dazu ausgelegt, das aktuelle Bild des Markers mit dem Referenzbild zu vergleichen, um aus dem Vergleich eine aktuelle Position des Markers und damit des Objektes zu ermitteln.

Dadurch, dass der Marker, der vorzugsweise plan, d.h. nicht gewölbt ist, eine Mehrzahl von einzelnen Feldern aufweist, die jeweils ein statistisches Rauschmuster aufweisen, kann der Rechenaufwand bei der Bildauswertung verringert und die Bildauswertung im Hinblick auf die Präzision der Positionsbestimmung des Markers und damit des Objektes deutlich verbessert werden.

Mit dem erfindungsgemäßen System und dem erfindungsgemäßen Verfahren ist es grundsätzlich möglich, die N-dimensionale Position des Markers zu ermitteln, woraus die N- dimensionale Position des Objektes ermittelt werden kann. N kann dabei im Bereich von 2 bis 6 liegen.

Vorzugsweise sind die Rauschmuster derart beschaffen, dass das Rauschen eine hohe Bandbreite im Frequenzraum aufweist.

Hierdurch wird eine besonders präzise Lokalisierung der einzelnen Felder des Markers im Bild des Markers ermöglicht. Je höher die Frequenz-Bandbreite des Rauschens ist, um so genauer können die einzelnen Felder des Markers lokalisiert werden.

Die Rauschmuster der einzelnen Felder sind vorzugsweise von Feld zu Feld verschieden, insbesondere zumindest näherungsweise unkorreliert.

Eine sehr schmale Autokorrelationsfunktion, die idealerweise eine $\delta$- bzw. Dirac-Funktion ist, erhöht die Genauigkeit der Positionsbestimmung des Markers und damit des Objektes noch weiter. Hierdurch ist das Verfahren und das System insbesondere für korrelationsbasierte Bildauswertungsverfahren geeignet, um zumindest eines oder mehrere der einzelnen Felder exakt im aktuell erfassten Bild des Markers zu lokalisieren.

Vorzugsweise sind die Rauschmuster Graustufenmuster, insbesondere mit einer Wahrscheinlichkeitsdichte von Grauwerten, die eine Gaußverteilung ist. Die Graustufenmuster können beispielsweise als Schwarz-Weiss-Pixelmuster in einem Zufallsprozess erzeugt werden.

Eine Gaußsche Wahrscheinlichkeitsdichtefunktion bzw. Verteilung der Grauwerte hat den Vorteil einer maximalen Entropie und daher eines maximalen Informationsgehalts für eine gegebene Standardabweichung. Die gegebene Standardabweichung bezieht sich auf den Grauwertbereich (Intensitätsbereich) der Bilderfassungseinheit. Die Leistungsdichte des Rauschens kann beispielsweise so gewählt werden, dass der $3\sigma$-Wert der GaußVerteilung in den Grauwertbereich der Bilderfassungseinheit passt.

Vorzugsweise enthalten die Rauschmuster weißes Rauschen, das als solches eine sehr schmale Autokorrelationsfunktion aufweist. Je schmaler die Autokorrelationsfunktion ist, um so besser können korrelationsbasierte Algorithmen die Rauschmuster lokalisieren. Weißes Rauschen weist eine $\delta$- bzw. Dirac-Funktion als Autokorrelationsfunktion auf.

Der Füll- oder Belegungsgrad der Fläche des Markers mit Rauschmustern sollte im Sinne einer möglichst exakten Positionsbestimmung so hoch wie möglich sein.

In einer weiteren bevorzugten Ausgestaltung sind die Felder des Markers polygonförmig, insbesondere rechteckig, insbesondere quadratisch.

In dieser Ausgestaltung sind die einzelnen Felder des Markers mit geraden Linien berandet. Auch die Fläche des Markers selbst ist vorzugsweise polygonförmig, insbesondere rechteckig, insbesondere quadratisch, berandet. Die geradlinige Berandung der Felder des Markers und/oder des Markers selbst hat den Vorteil, dass bei der Auswertung des aktuellen Bildes des Markers zunächst mit geringem Rechenaufwand eine grobe Bestimmung der Projektionsparameter und eine grobe Lokalisierung der Felder des Markers durchgeführt werden kann, wodurch der Rechenaufwand bei der nachfolgenden Suche nach den exakten Projektionsparametern bzw. Feinlokalisierung der Felder durch Auswertung eines oder mehrerer der abgebildeten Rauschmuster verringert werden kann.

Die Felder des Markers können matrixförmig in Zeilen und Spalten angeordnet sein und können dabei jeweils die gleiche Orientierung zueinander aufweisen.

Es ist aber auch möglich, die Felder des Markers relativ zueinander verdreht und/oder versetzt anzuordnen, um Mehrdeutigkeiten bei der Grobbestimmung der Orientierung des Markers und/oder der Felder im aktuellen Bild des Markers zu beseitigen. Beispielsweise können im Falle von rechteckigen oder quadratischen Feldern die einzelnen Felder jeweils um einen Drehwinkel zueinander verdreht sein, so dass keines der Felder die gleiche Orientierung wie eines der anderen Felder aufweist.

Mit mehr als viereckigen Feldern, allgemein vieleckigen Feldern, oder mit Feldern mit unterschiedlicher Anzahl an Ecken, können derartige Mehrdeutigkeiten ebenfalls vermieden werden.

Es ist aber auch möglich, dass die einzelnen Felder des Markers kreisförmig oder elliptisch sind.

Um im Falle von kreisförmigen Feldern einen möglichst hohen Füllgrad der Fläche des Markers mit Rauschmustern zu erreichen, kann vorgesehen sein, die kreisförmigen Felder so zueinander zu versetzen, dass eine möglichst dichte Belegung der Fläche des Markers mit den kreisförmigen Feldern erreicht wird.

Wie bereits oben erwähnt, ist eine Vorab-Grobbestimmung der Position des Markers anhand des erfassten Bildes des Markers vorteilhaft. In diesem Zusammenhang ist die Bildauswerteeinheit dazu ausgelegt, eine Grobbestimmung der Position des von der Bilderfassungseinheit aktuell erfassten Markers anhand Erkennung von Ecken und/oder Rändern des Markers und/oder der Felder des Markers vorzunehmen.

Zusätzlich oder alternativ kann auch eine Radon/Hough-Transformation berechnet werden, die ein robustes Verfahren zur Erkennung von Geraden, Kreisen oder beliebigen anderen parametrisierbaren geometrischen Figuren in einem Graustufenbild darstellt. Wie bereits erwähnt, hat eine Grobbestimmung der Position des Markers den Vorteil, dass der Rechenaufwand für die nachfolgende exakte Positionsbestimmung verringert wird.

Im Zusammenhang mit der vorstehend genannten Maßnahme ist die Bildauswerteeinheit vorzugsweise dazu ausgelegt, eine Feinbestimmung der Position des von der Bilderfassungseinheit aktuell erfassten Markers anhand einer Erkennung der Rauschmuster im Vergleich mit dem abgelegten Referenzbild der Rauschmuster vorzunehmen.

Die Feinbestimmung kann beispielsweise durchgeführt werden, indem für ein oder mehrere Rauschmuster eine Anzahl von Parametersätzen berechnet werden. Es kann dann ein Ähnlichkeitsmaß, beispielsweise eine Merit-Funktion, für jeden der angenommenen Parametersätze berechnet werden, indem das Referenzbild (das mit den angenommenen Parametern modifiziert/verzerrt, verschoben wird) mit dem entsprechenden aktuell erfassten Bild des Markers verglichen wird. Derjenige Parametersatz, der die höchste Ähnlichkeit (oder die geringste Nicht-Ähnlichkeit) erzielt, ist der Parametersatz, der letztendlich das Feld des Markers oder die Felder des Markers präzise lokalisiert.

Es kann aber auch als Ähnlichkeitsmaß der (normalisierte) Korrelationskoeffizient verwendet werden. Der normalisierte Korrelationskoeffizient ermöglicht ebenso eine Beurteilung der aktuellen Übereinstimmungsqualität, d.h. wie gut/zuverlässig das aktuell ausgewertete Feld lokalisiert worden ist.

Ebenso ist es möglich, um den Rechenaufwand zu reduzieren, einen Ansatz zu wählen, bei dem die Suche nach dem Parametersatz, der das betreffende Feld des Markers eindeutig lokalisiert, zunächst anhand eines Bildes mit geringerer Auflösung des oder der Rauschmuster durchzuführen, und anschließend die Suche anhand des Bildes mit höherer Auflösung zu verfeinern. Damit können Suchbereiche in dem Bild höherer Auflösung eingegrenzt und der Rechenaufwand reduziert werden.

In einer weiteren bevorzugten Ausgestaltung weist die Bilderfassungseinheit einen Tiefpassfilter oder eine Einrichtung zur Defokussierung auf.

Obwohl es einerseits vorteilhaft und bevorzugt ist, die Rauschmuster der Felder des Markers so bereitzustellen, dass das Rauschen eine sehr große Bandbreite aufweist, um eine möglichst exakte Lokalisierung der einzelnen Felder zu ermöglichen, kann es vorteilhaft und angezeigt sein, die Bandbreite des Rauschens der Rauschmuster durch Verwendung eines Tiefpassfilters während der Bilderfassung zu reduzieren, um sog. "Aliasing"-Effekte zu vermeiden. "Aliasing" kann auftreten, wenn das von der Bilderfassungseinheit aktuell erfasste Bild stark projektionsverzerrt ist, beispielsweise wenn die Kamera unter streifendem Einfall auf die Fläche des Markers blickt. In diesem Fall kann es vorkommen, dass Teile des erfassten Bildes mit einer sehr geringen räumlichen Abtastrate abgetastet werden. Dies kann zu falschen Lokalisierungen der Felder des Markers führen, was wiederum die Positions- und/oder Orientierungsbestimmung des Markers und damit des Objektes stark verfälschen kann.

Anstelle eines Tiefpassfilters im Strahlengang der Bilderfassungseinheit kann auch vorgesehen sein, deren Optik in gezielter Weise zu defokussieren.

Besonders vorteilhaft ist es, wenn die Rauschmuster während der Herstellung des Markers bzw. der Herstellung der Rauschmuster durch eine Tiefpassfilterung von weißem Rauschen erzeugt werden. Dies hat den Vorteil, dass über die Filterung bei der Herstellung des Markers eine bessere Kontrolle besteht, als wenn die Filterung durch Optiken im Strahlengang der Bilderfassungseinheit vorgenommen wird. Bei der Tiefpassfilterung von weißem Rauschen bei der Erzeugung der Rauschmuster während der Herstellung des Markers kann nämlich ein guter Kompromiss zwischen einer möglichst hohen Bandbreite der Rauschmuster und einer genügenden Tiefpassfilterung gefunden werden, um einerseits die Autokorrelationsfunktion der Rauschmuster so schmal wie möglich zu halten, andererseits Aliasing-Effekte möglichst zu vermeiden oder zumindest zu verringern.

Bei der Positionsbestimmung von Objekten, die einen großen Bewegungsspielraum haben, und bei denen entsprechend auch stark projektionsverzerrte Bilder des Markers von der Bilderfassungseinheit erfasst werden, ist es vorteilhaft, zumindest für einige Freiheitsgrade der Bewegung mehrere Kameras und/oder mehrere Marker in dem System und dem Verfahren zu verwenden, so dass stets zumindest eine Kamera zumindest einen Marker mit einer noch akzeptablen Projektionsverzerrung beobachtet.

Sowohl das erfindungsgemäße System als auch das erfindungsgemäße Verfahren können für beliebige bewegliche Objekte zur Bestimmung deren Position und/oder Orientierung verwendet werden. Das Objekt kann insbesondere ein bewegliches Maschinenteil, insbesondere ein Roboterarm einer Maschine sein, wie sie bei der Herstellung von Spiegeln oder anderen optischen Bauteilen verwendet wird.

Das bewegliche Objekt kann aber auch eine bewegliche Komponente eines optischen Systems selbst sein, insbesondere eine Komponente einer Projektionsbelichtungsanlage für die Mikrolithographie. Beispielsweise kann die bewegliche Komponente ein beweglicher Spiegel sein.

Die Erfindung lässt sich jedoch auch in anderen Bereichen einsetzen, beispielsweise in der Medizintechnik, der Roboter-gestützten Chirurgie usw.

Weitere Vorteile und Merkmale ergeben sich aus der nachfolgenden Beschreibung und der beigefügten Zeichnung.

Es versteht sich, dass die vorstehend genannten und nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden mit Bezug auf diese hiernach näher beschrieben. Es zeigen:

Fig. 1    ein Ausführungsbeispiel eines Systems zur Positionsbestimmung eines beweglichen Objektes im Raum, wobei das Objekt beispielhaft ein Roboterarm einer Maschine ist, und ein erstes Ausführungsbeispiel eines Markers zur Positionsbestimmung;

Fig. 2    ein von einer Bilderfassungseinheit des Systems in Fig. 1 erfasstes beispielhaftes Bild eines am Roboterarm in Fig. 1 angebrachten Markers;

Fig. 3    ein Blockschaltbild, das ein Ausführungsbeispiel eines Verfahrens zur Positionsbestimmung eines beweglichen Objektes im Raum mittels des Systems in Fig. 1 veranschaulicht;

Fig. 4    ein praktisches Beispiel eines einzelnen Rauschmusters des Markers in Fig. 1;

Fig. 5    ein weiteres Ausführungsbeispiel eines Markers zur Positionsbestimmung eines beweglichen Objektes;

Fig. 6    ein noch weiteres Ausführungsbeispiel eines Markers zur Positionsbestimmung eines beweglichen Objektes;

Fig. 7    ein noch weiteres Ausführungsbeispiel eines Markers zur Positionsbestimmung eines beweglichen Objektes, wobei der Marker gegenüber Fig. 6 abgewandelt ist;

Fig. 8    ein von einer Bilderfassungseinheit des Systems in Fig. 1 erfasstes Bild eines Markers bei streifender Blickrichtung der Bilderfassungseinheit auf den Marker; und

Fig. 9    zwei Rauschmuster eines Markers, wobei das linke Rauschmuster ungefiltert und das rechte Rauschmuster tiefpassgefiltert ist.

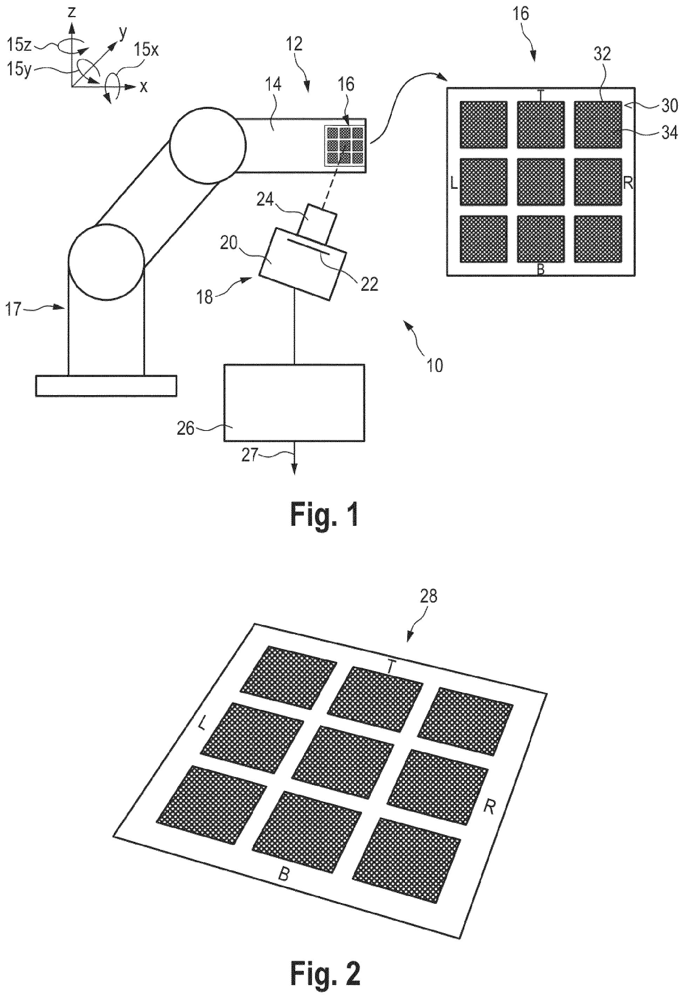

In Fig. 1 ist ein mit dem allgemeinen Bezugszeichen 10 versehenes System zur Positionsbestimmung eines beweglichen Objektes 12 im Raum schematisch gezeigt. In dem gezeigten Ausführungsbeispiel ist das Objekt 12 ein Roboterarm 14 einer Maschine 15. Der Roboterarm 14 ist beweglich, beispielsweise translatorisch beweglich und drehbeweglich. Der aktuelle Ort des Roboterarms 14 kann beispielsweise in kartesischen Koordinaten x, y, z ausgedrückt werden, und die aktuelle Orientierung als Drehwinkel um eine oder mehrere der Achsen x, y, z. Das System 10 ist grundsätzlich in der Lage, die Position des Objektes 12 im Raum gemäß 6 Freiheitsgraden der Bewegung, d.h. 6-dimensional zu bestimmen. Das Arbeitsvolumen des Roboterarms kann groß sein, bspw. 1 m³ oder mehr betragen. In Fig. 1 ist beispielhaft ein Koordinatensystem mit x-, y- und z-Achse gezeigt, wobei Pfeile $15_x$, $15_y$ und $15_z$ die Freiheitsgrade der Drehung des Objektes 12 um die x-, y- und z-Achse veranschaulichen.

Das System 10 weist einen Marker 16 auf, der an dem Objekt 12 angebracht ist. Der Marker 16 ist bezüglich des Objektes 12 ortsfest, d.h. bewegt sich bei einer Bewegung des Objektes 12 mit diesem mit.

Das System 10 weist weiterhin eine Bilderfassungseinheit 18 entfernt von dem Objekt 12 auf. Die Bilderfassungseinheit 18 umfasst eine Kamera 20, die beispielsweise eine Videokamera ist, und die mit einem Bildsensor 22 ausgestattet ist. Der Bildsensor 22 kann als handelsüblicher Bildsensor ausgebildet sein.

Die Kamera 20 ist dazu angeordnet, ein Bild des Markers 16 zu erfassen, wobei die Kamera in zeitlicher Abfolge regelmäßig bzw. kontinuierlich Bilder des Markers 16 erfasst, so dass die sich ändernden Positionen des Objektes 12 permanent nachverfolgt werden können. Die Kamera 20 weist weiterhin ein Objektiv 24 auf, das den Marker 16 auf den Bildsensor 22 abbildet.

Die Kamera 20 kann zumindest während des Betriebs des Systems 10 raumfest angeordnet sein. Die Kamera 20 kann aber auch beweglich sein.

Das System 10 weist weiterhin eine Bildauswerteeinheit 26 auf, die mit der Bilderfassungseinheit 18 verbunden ist und dazu dient, das von der Kamera 20 erfasste Bild des Markers 16 zur Ermittlung der aktuellen Position des Markers 16 und damit des Objektes 12 auszuwerten.

Während in Fig. 1 das System 10 aus Gründen der Einfachheit nur mit einer Kamera 20 und einem Marker 16 gezeigt ist, versteht es sich, dass das System 10 mehrere Kameras 20 und mehrere Marker 16 aufweisen kann. Die mehreren Marker 16 können dabei an unterschiedlichen Positionen an dem Objekt 12 angebracht sein, und die Kameras 20 können im Raum verteilt sein, dass die Kameras 20 den oder die Marker 16 unter unterschiedlichen Blickwinkeln beobachten.

Das System 10 kann als reines Messsystem zur Nachverfolgung der Bewegungen des Objektes 12 ausgebildet sein, kann aber auch für eine Bewegungssteuerung oder eine Bewegungsregelung für das Objekt 12 verwendet werden.

Je nach Position des Objektes 12 im Raum entsteht auf dem Bildsensor 22 der Kamera 20 ein mehr oder weniger projektionsverzerrtes Bild des Markers 16. Fig. 2 zeigt beispielhaft ein solches projektionsverzerrtes Bild 28 des Markers 16 in Fig. 1. Das Ziel ist es nun, aus dem Bild 28 des Markers 16 die genaue Position des Objektes 12 zu bestimmen, indem die Position des Markers 16 im Koordinatensystem der Kamera 20 ermittelt wird. In der praktischen Ausführung des Systems 10 werden Gesichtspunkte wie Kamerakalibrierung und Abbildungsfehler der Kamera 20 berücksichtigt, wobei dies für das Verständnis der vorliegenden Erfindung jedoch nicht erforderlich ist. Für das Verständnis der Erfindung ist es ausreichend, die Kamera 20 als Lochkamera zu betrachten.

Das Ergebnis der Positionsbestimmung durch die Bildauswerteeinheit 26 wird von der Bildauswerteeinheit 26 ausgegeben, wie mit einem Pfeil 27 in Fig. 1 angedeutet ist, beispielsweise an eine nicht dargestellte Anzeige, oder an eine Steuerung oder Regelung zur Bewegungssteuerung/-regelung des Objektes 12.

In Fig. 1 ist der Marker 16 zusätzlich in Alleinstellung und vergrößert dargestellt. Mit "T" ist das obere Ende des Markers 16, mit "L" das linke Ende, mit "R" das rechte Ende und mit "B" das untere Ende des Markers 16 bezeichnet.

Der Marker 16 ist flächig ausgebildet. Der Marker 16 ist vorzugsweise plan. Eine Fläche 30 des Markers 16 ist in dem in Fig. 1 gezeigten Ausführungsbeispiel quadratisch ausgebildet ist. Andere Flächenformen wie allgemein rechteckig, allgemein polygonförmig, insbesondere vieleckig, können ebenso in Betracht gezogen werden. Die Fläche 30 ist in eine Mehrzahl von Feldern 32 unterteilt, wobei in dem Ausführungsbeispiel in Fig. 1 insgesamt neun derartige Felder 32 vorhanden sind. Die Anzahl der Felder 32 ist jedoch nicht kritisch. Sie kann kleiner oder größer als 9 sein. Die Felder 32 sind in dem gezeigten Ausführungsbeispiel in Fig. 1 ebenfalls quadratisch. Die Felder 32 können jedoch auch allgemein rechteckig oder allgemein polygonförmig sein.

Die Anordnung der Felder 32 ist in dem in Fig. 1 gezeigten Ausführungsbeispiel matrixförmig in Zeilen und Spalten ausgebildet, wobei die einzelnen Felder 32 untereinander jeweils die gleiche Orientierung bzw. Drehstellung aufweisen.

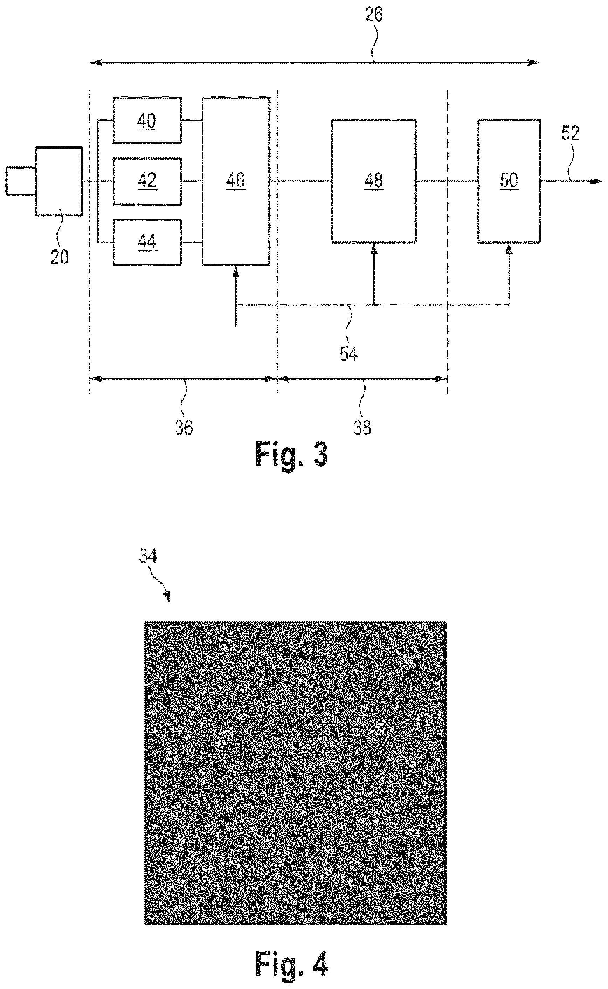

Jedes der Felder 32 ist mit einem statistischen Rauschmuster 34 gefüllt. In den Figuren 1, 2, 5 bis 9 sind die Rauschmuster 34 aus Gründen der vereinfachten Darstellung als regelmäßige Muster und untereinander gleich gezeigt. Es versteht sich aber, dass die Rauschmuster 34 durch einen stochastischen Prozess erzeugt wurden und somit keine dominante Periodizität aufweisen und auch nicht regelmäßig sind Außerdem können die Rauschmuster untereinander gleich sein. Die Rauschmuster 34 können untereinander von Feld 32 zu Feld 32 vorteilhaft aber auch vollkommen verschieden sein. Die Rauschmuster 34 können mit anderen Worten untereinander einzigartig sein. Eine praktische Realisierung eines einzelnen Rauschmusters 34 ist in Fig. 4 gezeigt.

Die Rauschmuster 34 füllen die Fläche 30 des Markers 16 möglichst mit einem hohen Füllgrad aus.

Die Rauschmuster 34 sind vorzugsweise, wie in Fig. 4 beispielhaft gezeigt, als Graustufenmuster ausgebildet. Die Rauschmuster 34 weisen vorzugsweise eine so groß wie mögliche Bandbreite im (Orts-)Frequenzraum auf. Die Rauschmuster 34 werden bei der Herstellung des Markers 16 erzeugt und als Referenzbild in der Bildauswerteeinheit 26 abgespeichert.

Die Kreuzkorrelationsfunktion aller Rauschmuster 34 des Markers 16 ist vorzugsweise so klein wie möglich, d.h. die Rauschmuster 34 sind vorzugsweise von Feld zu Feld 32 zumindest näherungsweise unkorreliert.

Die Rauschmuster 34 enthalten vorzugsweise breitbandiges weißes Rauschen mit einem maximal möglichen Signalwert. Maximaler Signalwert bedeutet hier, dass der Bildsensor 22 der Kamera 20 nicht in die Schwarz- oder Weißgrenze läuft, sondern der Grauwertbereich (Intensitätsbereich) des Bildsensors 22 vollständig genutzt wird. Wie bereits erwähnt, sollte die Fläche 30 des Markers 16 möglichst maximal mit dem weißen Rauschen gefüllt sein.

Weißes Rauschen besitzt eine schmale Autokorrelationsfunktion. Je schmaler die Autokorrelationsfunktion ist, um so besser können korrelationsbasierte Algorithmen die Rauschmuster 34 lokalisieren. Weißes Rauschen besitzt einen $\delta$-Peak als Autokorrelationsfunktion. Dies ist die engste Autokorrelationsfunktion, die möglich ist. Für korrelationsbasierte Lokalisierungsalgorithmen ist weißes Rauschen daher zu bevorzugen.

Des Weiteren sind die Grauwerte der Rauschmuster Gauß-verteilt. Eine Gaußsche Wahrscheinlichkeitsdichtefunktion (Verteilung der Grauwerte) weist die maximale Entropie auf und damit den maximalen Informationsgehalt für eine gegebene Standardabweichung. Die gegebene Standardabweichung bezieht sich auf den Grauwertbereich (Intensitätsbereich) der Kamera 20. Die Leistung des Rauschens kann beispielsweise so gewählt werden, dass der $3\sigma$-Wert der Gauß-Verteilung in den Grauwert(Intensitätswert)-Bereich der Kamera passt.

Nicht notwendigerweise stets, jedoch üblicherweise ist ein Rauschmuster, das für korrelationsbasierte Lokalisierungsalgorithmen gut geeignet ist, auch für andere Lokalisierungsalgorithmen geeignet.

Mit Bezug auf Fig. 3 wird ein Ausführungsbeispiel der Bildauswerteeinheit 26 und ein Verfahren beschrieben, wie die Bildauswerteeinheit 26 das von der Kamera 20 aktuell erfasste Bild des Markers 16 auswertet, um daraus die Position des Markers 16 im Raum und damit des Objekts 12 im Raum zu ermitteln.

Die in der Bildauswerteeinheit 26 ablaufenden Prozesse sind vorzugsweise in zwei übergeordnete Prozessschritte 36 und 38 unterteilt, wobei der Prozessschritt 36 zuerst abläuft.

Der erste Prozessschritt 36 ist eine Grobbestimmung, die der groben Lokalisierung des Markers 16 und der Felder 32 des Markers 16 dient. Die Grobbestimmung wird anhand des aktuell erfassten Bildes des Markers in der Kamera 20 durchgeführt. Dies kann beispielsweise durch eine Randerkennung 40 des Markers 16 und/oder der Felder 32 des Markers 16, durch eine Eckenerkennung 42 des Markers 16 und/oder der Felder 32 des Markers 16, und/oder durch Berechnung 44 einer Radon/Hough-Transformation erfolgen. Die Schritte 40, 42 und 44 können effizient beispielsweise auf einem FPGA (Field Programmable Gate Array, d.h. integrierter Schaltkreis der Digitaltechnik, in den eine logische Schaltung geladen werden kann) implementiert werden. Die Informationen aus den Schritten 40, 42 und 44 werden in einem Informationsfusionsschritt 46 miteinander verknüpft, um hieraus noch im Rahmen der Grobbestimmung der Position des Markers 16 verbesserte Lokalisierungsinformationen zu erhalten. Der Informationsfusionsschritt 46 oder ein Teil desselben kann auf einem Mikroprozessor in Software ausgeführt sein. Dies deswegen, weil die Analysen der Randerkennung 40, der Eckenerkennung 42, der Radon/Hough-Transformation eine moderate Anzahl von Koordinaten von Punkten und/oder eine Liste mit parametrisierten Linien ergeben statt einer großen Menge an Bilddaten.

Aus der Grobbestimmung ergeben sich grobe Projektionsparameter und eine grobe Lokalisierung der Felder 32 des Markers 16.

Nach der Grobbestimmung 36 wird eine Feinbestimmung 38 durchgeführt, die der Feinlokalisierung insbesondere der Felder 32 dient. Der Vorteil einer Grobbestimmung im Vorfeld der Feinbestimmung besteht darin, dass die Suchbereiche für die Feinlokalisierung der Felder 32 begrenzt werden können. Dies verringert vorteilhaft die Rechenzeit.

Die Feinbestimmung 38 umfasst einen Feinabgleich 48 der Rauschmuster 34 des Markers 16 anhand des aktuell erfassten Bildes des Markers 16 und des Referenzbildes der Rauschmuster 34, das in der Bildauswerteeinheit 26 abgespeichert ist. Die Feinbestimmung 38 ergibt präzise Projektionsparameter und präzise Lokalisierungen der Felder 32 des Markers 16.

Abschließend erfolgt in einem Schritt 50 die Berechnung der Position des Markers 16 im Raum und damit des Objektes 12 im Raum. Das Ergebnis wird anschließend gemäß einem Pfeil 52 ausgegeben.

Im Rahmen der gesamten oder in einem Teil der Bildauswertung ist es weiterhin möglich, Bewegungsinformation von vorhergehenden Bildern des Markers 16 zu verwenden, und zwar bei den Schritten 46, 48 und 50, wie mit dem Bezugszeichen 54 bezeichnet ist. Die Bewegungsinformation aus vorhergehend erfassten Bildern des Markers 16 kann dazu verwendet werden, Rechenzeiten durch weitere Eingrenzung von Suchbereichen zu reduzieren oder die Nachverfolgung der Bewegung des Objekts 12 durch das System 10 zu verbessern.

Wenn die Grobbestimmung der Position des Markers 16 ohne Auswertung der Rauschmuster 34 erfolgt, beispielsweise nur anhand einer Ecken- und/oder Randerkennung des Markers 16 und/oder der Felder 32, besteht bei dem Ausführungsbeispiel des Markers 16 eine Mehrdeutigkeit bezüglich einer Drehung des Markers 16 um jeweils 90°. Ursache hierfür ist die streng symmetrische und regelmäßige Anordnung der Felder 32 mit gleicher Größe und als Quadrate mit gleicher Orientierung.

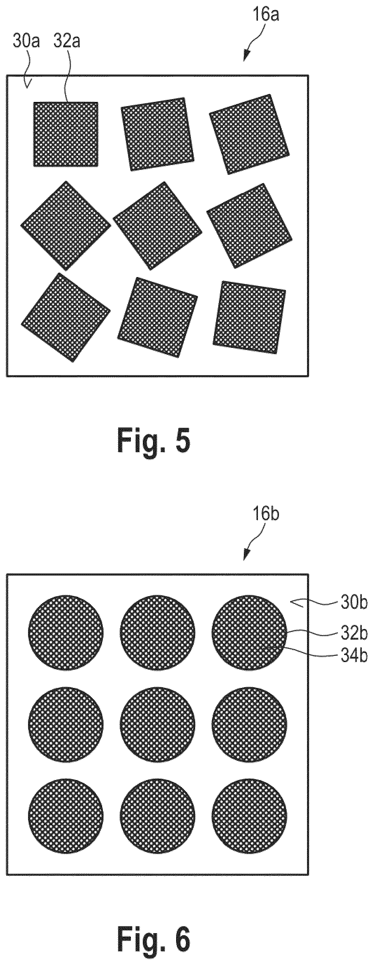

Fig. 5 zeigt ein Ausführungsbeispiel eines Markers 16a, bei dem diese Mehrdeutigkeit vermieden wird. Bei dem Marker 16a sind die Felder 32a alle unterschiedlich zueinander orientiert. In dem gezeigten Beispiel mit neun Feldern 32a können die Felder 32a beispielsweise von Feld zu Feld um 9° zueinander verdreht sein. Hiermit wird die Mehrdeutigkeit bezüglich einer 0°-Drehung des Markers 16a oder bezüglich Drehungen des Markers 16a um ganzzahlige Vielfache von 90° beseitigt. Hierdurch wird eine unzweideutige Identifizierung der Orientierung des Markers 16a bereits in der Grobbestimmungsphase gemäß Fig. 3 ermöglicht, ohne dass die Rauschmuster 34 ausgewertet werden. Beispielsweise kann die obere linke Ecke des Markers 16a stets identifiziert werden, da nur bezüglich des linken oberen Feldes 32a die Ränder des Feldes 32a parallel zu den äußeren Rändern des Markers 16a verlaufen.

Eine weitere nicht dargestellte Möglichkeit, Mehrdeutigkeiten bei der Grobbestimmung durch Rand- und Eckenerkennung zu vermeiden, besteht darin, dass die Felder 32 des Markers 16 vieleckige polygonale Strukturen aufweisen.

Nachfolgend werden Beispiele beschrieben, wie die Feinbestimmung 38 und damit die präzise Bestimmung der Position des Markers 16 im Raum anhand einer Auswertung der Rauschmuster 34 im Bild des von der Bilderfassungseinheit 16 erfassten Markers 16 durchgeführt werden kann.

Die Feinbestimmung dient der Lokalisierung der Felder 32 und erfolgt durch Auswerten der Rauschmuster 34 im Kamerabild. Die Feinlokalisierung der Felder 32 kann beispielsweise durch einen Ansatz implementiert werden, bei dem der Parameterraum (Positionsparameter) im Rahmen einer Vollsuche, also vollständig durchsucht wird. Da jedoch Vorkenntnisse aus der Grobbestimmung gemäß Prozessschritt 36 vorhanden sind, kann die Größe der Suchbereiche im Parameterraum begrenzt werden, was auch die Rechenzeit begrenzt.

Eine Vollsuche bedeutet prinzipiell, die Rauschmuster 34 mit einer Anzahl von angenommenen Parametersätzen zu bearbeiten und damit jeweils ein künstliches Kamerabild mit den jeweils angenommenen Parametern zu erzeugen. Ein Ähnlichkeitsmaß (Merit-Funktion) wird dann für jeden der angenommenen (gesuchten) Parametersätze berechnet, indem das Referenzbild der Rauschmuster (Mastermuster), das in der Bildauswerteeinheit abgespeichert ist, mit dem entsprechenden aktuell erfassten Bild des Markers 16 verglichen wird, wobei das Mastermuster mit den angenommenen Parametern modifiziert, verzerrt, verschoben wird. Derjenige Parametersatz, der die maximale Ähnlichkeit (oder die minimale Nicht-Ähnlichkeit) des modifizierten/verzerrten/verschobenen des Mastermusters mit dem oder den aktuell erfassten Rauschmustern 34 erzielt, ist der Parametersatz, der letztendlich das oder die Felder 32 feinlokalisiert.

Da eine Vollsuche bedeutet, eine Vielzahl an Parametersätzen in Kaskadenschleifen zu probieren, kann die Berechnung beschleunigt werden, indem mehrere parallele Einheiten beispielsweise auf einem FPGA laufen. Auf den ersten Blick benötigen alle Recheneinheiten einen direkten Zugriff auf die erfassten Bilddaten des Markers 16. Wenn hier eine Engstelle auftritt, können die Bilddaten kopiert/dupliziert werden (beispielsweise in mehreren Block-RAM-Einheiten innerhalb eines FPGA), bevor die Recheneinheiten die Daten verwenden. Folglich müssen die Recheneinheiten, die die Ähnlichkeitsberechnung durchführen, nicht alle auf einen Speicher zugreifen.

Als Ähnlichkeitsmaß für die Bestimmung des Parametersatzes, der eines oder mehrere oder alle der Felder 32 letztendlich lokalisiert, kann der (normalisierte) Korrelationskoeffizient verwendet werden. Der normalisierte Korrelationskoeffizient ermöglicht auch eine Beurteilung der aktuellen Qualität des Abgleiches, d.h. wie gut/zuverlässig ein aktuell ausgewertetes Feld lokalisiert worden ist.

Während der Vollsuche wird das Maximum des Ähnlichkeitsmaßes ausgemacht, um den passenden Parametersatz, der die Position des Feldes 32 repräsentiert, zu finden. Der Wert des Maximums selbst kann als Maß für die Güte der Lokalisierung eines bestimmten Feldes herangezogen werden. Dieser Wert kann beispielsweise auch in einen Gewichtungsfaktor transformiert werden, der in einem Abschätzungsschritt bei der Positionsbestimmung des Markers 16 im Raum verwendet werden kann. Mit diesem Ansatz werden zuverlässiger lokalisierte Felder 32 mehr in Betracht gezogen als unzuverlässigere.

Da es für die Vollsuche eine Vielzahl von Freiheitsgraden gibt, ist die Berechnung noch sehr aufwendig.

Für jedes Pixel innerhalb des Rauschmusters 34 muss eine verzerrte Koordinate berechnet werden, beispielsweise mit einer Berechnung ähnlich zu der nachfolgenden, die in dem Artikel von R. Hartley und A. Zisserman: Multiple View Geometry, Tutorial, CVPR, June 1999, offenbart ist:

$$x' = \frac{x'_1}{x'_3} = \frac{h_{11}x + h_{12}y + h_{13}}{h_{31}x + h_{32}y + h_{33}}, \qquad y' = \frac{x'_2}{x'_3} = \frac{h_{21}x + h_{22}y + h_{23}}{h_{31}x + h_{32}y + h_{33}}$$

In den obigen Gleichungen der Projektionstransformation gibt es einen Freiheitsgrad für die Normalisierung. Es kann dabei untersucht werden, ob alle Parameter der Projektionstransformation während der Suche modifiziert werden müssen. Solche Untersuchungen können zeigen, dass das Fixieren mancher Parameter (unter Berücksichtigung des Ergebnisses der Grobbestimmung) ausreichend gute Ergebnisse erzielt, während dies den erforderlichen Rechenaufwand stark reduziert.

Eine weitere Option besteht darin, eine Linearisierung der Projektionsgleichung zu untersuchen, was zu einer effizienteren Lösung führen kann. Dies bedeutet, dass die Koordinate eines projizierten Punktes effizienter in einem kleinen Suchbereich um die grob bestimmten Parameter herum, die aus der Grobbestimmung erhalten wurden, berechnet werden kann.

Eine weitere Möglichkeit, um den Rechenaufwand zu verringern, besteht darin, einen Ansatz zu wählen, bei dem die Suche zunächst an einem Bild des Markers 16 in der Kamera mit einer geringeren Auflösung durchgeführt wird, wobei die Suche anschließend an demselben Bild mit höherer Auflösung verfeinert wird. Das Vorwissen aus den Ergebnissen des Bildes mit der geringeren Auflösung kann dazu verwendet werden, die Suchbereiche in den Schritten zur Lokalisierung des oder der Felder 32 in dem Bild mit höherer Auflösung zu begrenzen.

Gemäß einem weiteren Ausführungsbeispiel kann anstelle der Verwendung des Korrelationskoeffizienten, der anhand der Bilddaten als Ähnlichkeitsmaß berechnet wird, ein Ansatz gewählt werden, der auf einer Census-Transformation basiert, um die Lokalisierung des oder der Felder 32 zu beschleunigen. Die Census-Transformation ist beispielsweise in dem Artikel von Fridtjof Stein: Efficient Computation of Optical Flow Using the Census Transform, Proceedings of the 26th DAGM Symposium, 2004, Seiten 79-86 beschrieben.

Die Feinbestimmung (Prozessschritt 38) zur exakten Lokalisierung der Felder 32 des Markers 16 anhand der Rauschmuster 34 ist besonders präzise, wenn, wie bereits erwähnt, die Rauschmuster eine große Bandbreite im Frequenzraum aufweisen. Die Größe der Bandbreite der Rauschmuster bestimmt unmittelbar die Genauigkeit des Systems 10. Rauschmuster mit weißem Rauschen haben eine enge Autokorrelationsfunktion, idealerweise einen 2-dimensionalen Delta-Puls, und sind daher optimal für korrelationsbasierte Blockabgleichverfahren geeignet, um die Felder 32 zu lokalisieren.

Rauschmuster mit vollfrequentem, d.h. sehr breitbandigem Inhalt ermöglichen eine gute Abschätzung einer durch Bewegung verursachten Unschärfe des Bildes für Geschwindigkeitsabschätzungen. Das heißt, dass der Frequenzinhalt des Bildes nur durch das Abbildungsverhalten der Kamera und durch eine bewegungsbedingte Unschärfe bestimmt ist.

Wenn die Felder 32 wie in Fig. 1 gezeigt gerade Linien als Rand aufweisen, wird eine effiziente grobe Vorabschätzung der Projektionsparameter und Markerpositions-Kandidaten ermöglicht. Ein Ellipsen-Fit wie für kreisförmige Felder erforderlich ist hier nicht erforderlich. Stattdessen können Radon/Hough-Transformations-artige Analysen verwendet werden, um die Linien und Feldpositions-Kandidaten zu finden. Zusätzlich oder alternativ können die Ecken analysiert werden, um die Rahmen bzw. Ränder des oder der Felder zu finden. Mathematisch gesehen und aus dem Gesichtspunkt der Genauigkeit kann ein Ellipsen-Fit besser sein, jedoch können Radon/Hough-Transformations-artige Analysen und/oder Eckenerkennungen effizient in Hardware/FPGA implementiert werden. Eine Radon-Transformationsberechnung kann effizient durchgeführt werden, indem das sog. "Central Slice Theorem" oder "Projection Slice Theorem" berücksichtigt wird.

Gemäß einem weiteren Ausführungsbeispiel eines Markers 16b, der in Fig. 6 gezeigt ist, kann der Marker 16b kreisförmige Felder 32b aufweisen, in die die Fläche 30b des Markers 16b unterteilt ist. Die Felder 32b sind wie bei dem Marker 16 bzw. dem Marker 16a mit jeweils einem statistischen Rauschmuster 34b gefüllt, wobei hinsichtlich der Ausgestaltung der Rauschmuster 34b auf die Beschreibung der Rauschmuster 34 des Markers 16 verwiesen werden kann.

Im Falle des Markers 16b kann die hohe Genauigkeit der Positionsbestimmung des Markers 16b aufgrund der Rauschmuster 34b mit hoher Bandbreite erreicht werden. Die Verwendung von kreisförmigen oder auch elliptischen Feldern 32b kann vorteilhaft sein, da auch unter einer projektiven Verzerrung eine kreisförmige Form eine kreisförmige/elliptische Form ergibt, während die hohe Messgenauigkeit durch die statistischen Rauschmuster innerhalb der Felder 32b erzielt wird.

Eine Grobbestimmung der Position und/oder Orientierung des Markers 16b kann durch Standardverfahren für Kreis- oder Ellipsenerkennung erreicht werden. Die detektierten Ellipsenparameter oder die entsprechenden Koordinatenliste kann zur Positionsberechnung zusätzlich zu den Ergebnissen der Feinlokalisierung der Rauschmuster 34b verwendet werden.

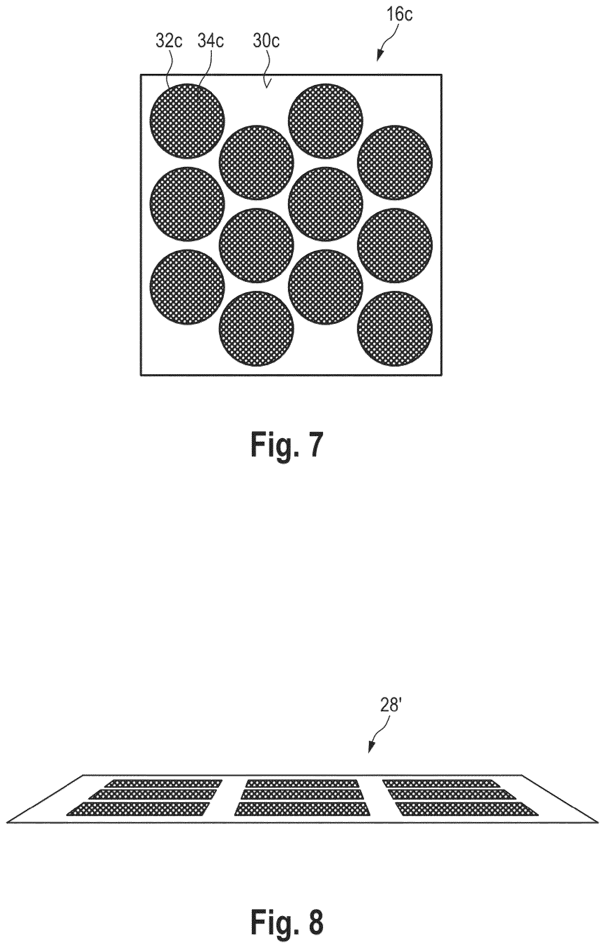

Im Falle des Markers 16c mit kreisförmigen (oder elliptischen) Feldern 32b kann gemäß dem Ausführungsbeispiel eines Markers 16c in Fig. 7 die Flächenbelegung bzw. der Füllgrad der Fläche 30c des Markers 16c erhöht werden, indem die Felder 32c nicht streng in Reihen und Spalten angeordnet werden, sondern so zueinander versetzt werden, dass eine möglichst hohe Flächenbelegung der Fläche 30c des Markers 16c erreicht wird. Bei der Anordnung gemäß Fig. 6 finden auf der Fläche 30c beispielsweise zwölf Felder 32c anstelle von nur neun Feldern 32b bei gleicher Größe der Felder 32c und 32b Platz.

Die Vergrößerung des Füllgrades der Fläche 30c und damit die Vergrößerung der Anzahl an Feldern, die mit statistischen Rauschmustern gefüllt sind, bedeutet, dass es mehr Beobachtungspixel gibt. Eine Erhöhung der Anzahl an Beobachtungspixeln in den Feldern verringert die Standardabweichung bei der Lokalisierung der Felder 32c.

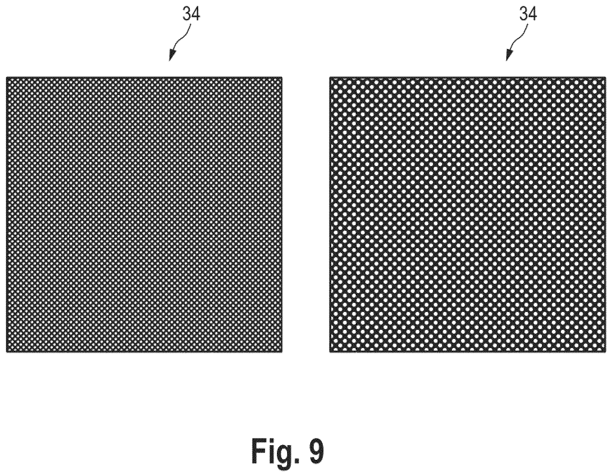

Nachfolgend wird mit Bezug auf Fig. 8 und 9 ein weiterer Aspekt beschrieben.

Fig. 8 zeigt ein Bild 28' vergleichbar zu dem Bild 28 in Fig. 2 des Markers 16 an dem Objekt 12, wobei nun jedoch die Kamera 20 unter stark streifendem Einfall der Blickrichtung den Marker 16 erfasst. Die Folge ist, dass das Bild 28' des Markers 16 auf dem Bildsensor 22 der Kamera 20 stark projektionsverzerrt ist. Dies bedeutet, dass zumindest Teile des Bildes 28' mit einer geringeren räumlichen Abtastrate abgetastet werden.

Diese verringerte Abtastrate aufgrund starker Projektionsverzerrung des Markers 16 führt gerade dann, wenn, wie dies im Rahmen der vorliegenden Erfindung bevorzugt ist, die Bandbreite der Frequenz des Rauschens der Rauschmuster maximiert ist, zu dem sog. "Aliasing". Aliasing ist ein Effekt und bezeichnet im Bereich der Signalanalyse Fehler, die auftreten, wenn im abzutastenden Signal Frequenzanteile vorkommen, die höher sind als die halbe Abtastfrequenz. Aliasing führt zu einer schlechten oder sogar vollständig falschen Lokalisierung bzw. Positionsbestimmung der Felder 32 im Bild 28' und damit zu einer unbrauchbaren Positionsbestimmung des Markers 16.

Da Aliasing schon während der Bildentstehung auftritt, kann es in der Bildauswerteeinheit 26 nicht rückgängig gemacht werden. Dieses Problem kann jedoch in dem Aufbau des Systems 10 gelöst werden. Die Bandbreite der Rauschmuster muss begrenzt werden, so dass Aliasing für Projektionsverzerrungen, die nicht zu stark sind, nicht auftritt.

Für sehr starke Projektionsverzerrungen werden die Positionsmessergebnisse - zumindest für manche Freiheitsgrade - sehr unsicher. Die Schwelle für das, was eine "zu starke" Projektionsverzerrung ist, muss während der Systementwicklung bestimmt werden. Das Problem des Aliasing kann beispielsweise dadurch gelöst werden, dass die Bilderfassungseinheit 18 mehrere Kameras 20 aufweist, die unter unterschiedlichen Blickrichtungen den Marker 16 beobachten, und/oder es können mehrere Marker 16 verteilt am Objekt 12 angebracht sein. Wenn mehrere Kameras vorhanden sind, sind diese so anzuordnen, dass zumindest eine Kamera stets ein Rauschmuster 34 mit genügend hoher Abtastrate beobachtet, so dass Aliasing vermieden oder klein genug ist. Im Falle der Verwendung mehrerer Marker 16 können diese so angeordnet werden, dass zumindest einer der Marker 16 von der Kamera 20 ohne allzu große Projektionsverzerrung beobachtet wird.

Eine andere Möglichkeit der Vermeidung von Aliasing ist die Begrenzung des Frequenzbandes (prinzipiell ein Anti-Aliasing-Filter). Dies kann beispielsweise dadurch erreicht werden, dass die Optik der Kamera 20 (Objektiv 24) bewusst defokussiert wird. Eine andere Möglichkeit besteht darin, die Rauschmuster 34 durch Tiefpassfilterung von weißem Rauschen zu erzeugen.

Die Bandbegrenzung durch Tiefpassfiltern des Rauschmusters während seiner Erzeugung ist (zur Verringerung von Aliasing-Effekten) vorteilhaft. Bei dieser Vorgehensweise besteht nämlich eine bessere Kontrolle über den Filter, der auf das Rauschmuster 34 angewendet wird, im Vergleich zu der Filterung mittels einer Optikverstellung während der Aufnahme des Markers 16 mit der Kamera 20. Die Kontrolle über den Filter, der auf das Rauschmuster während seiner Erzeugung angewandt wird, ist vorteilhaft, da der auf das Rauschmuster angewandte Filter die Autokorrelationsfunktion des resultierenden Rauschmusters bestimmt. Eine gute Abwägung zwischen genügender Tiefpassfilterung und dem Aufrechterhalten einer schmalen Autokorrelationsfunktion kann dadurch erreicht werden.

Fig. 9 zeigt links ein Beispiel eines statistischen Rauschmusters 34 ohne Tiefpassfilterung bei der Erzeugung, während rechts in Fig. 8 das Rauschmuster 34 mit einer Tiefpassfilterung erzeugt wurde. Zur Glättung des Rauschmusters 34 kann dabei beispielsweise ein 2D-Binomialfilter verwendet werden.

Ein alternativer Filter kann ein Filter sein, der eine rotationssymmetrische Autokorrelationsfunktion $e^{\wedge}(-\lambda * sqrt(x^2 + y^2))$ ergibt. $\lambda$ bestimmt die "Schmalheit" der Autokorrelationsfunktion, die sich auf die Bandbreite im Frequenzraum bezieht. Die Koordinaten x und y sind die räumlichen Koordinaten in der Bildebene.

Anti-Aliasing kann nicht nur auf die Rauschmuster 34 gerichtet sein, sondern auch auf die Ränder der Felder 32 und/oder die Ränder des Markers 16 selbst, da auch dort Aliasing-Effekte auftreten können.

## Patentansprüche

1. System zur 6D-Positionsbestimmung eines mit 6 Freiheitsgraden beweglichen Objektes (12) im Raum, mit einem oder mehreren zur Anbringung am Objekt (12) vorgesehenen Markern (16), der bzw. die zur 6D-Positionsbestimmung ortsfest am Objekt (12) angebracht ist bzw. sind, wobei der oder die Marker (16) jeweils eine Fläche (30) aufweisen, die in eine Mehrzahl von einzelnen Feldern (32) unterteilt ist, wobei die Felder (32) jeweils ein statistisches Rauschmuster (34) aufweisen, weiterhin mit einer vom Objekt (12) entfernten Bilderfassungseinheit (18), die dazu angeordnet ist, ein Bild (28) des oder der Marker (16) zu erfassen, wobei die Bilderfassungseinheit (18) mehrere Kameras (20) aufweist, die den oder die Marker (16) unter unterschiedlichen Blickwinkeln beobachten, und mit einer Bildauswerteeinheit (26), in der ein Referenzbild der Rauschmuster (34) abgelegt ist, und die dazu ausgelegt ist, im aktuell erfassten Bild (28) des oder der Marker (16) durch Vergleich mit dem Referenzbild zumindest eines der Felder (32) zu lokalisieren, um eine aktuelle Position des oder der Marker (16) im Raum zu ermitteln, wobei die Bildauswerteeinheit (26) dazu ausgelegt ist, eine Grobbestimmung der Position des oder der von der Bilderfassungseinheit (18) aktuell erfassten Marker (16) anhand Erkennung von Ecken und/oder Rändern des oder der Marker (16) und/oder der Felder (32) des oder der Marker (16) vorzunehmen.

2. System nach Anspruch 1, wobei die Felder (32, 32a) des oder der Marker (16, 16a) polygonförmig, insbesondere rechteckig, insbesondere quadratisch, sind, oder wobei die Felder (32b, 32c) des Markers (16b, 16c) kreisförmig oder elliptisch sind.

3. System nach Anspruch 1 oder 2, wobei die Felder (32, 32b) des oder der Marker (16, 16b) matrixförmig in Zeilen und Spalten angeordnet sind.

**4.** System nach Anspruch 2, wobei die Felder (32a, 32c) des oder der Marker (16a, 16c) relativ zueinander verdreht und/oder verschoben sind.

**5.** System nach einem der Ansprüche 1 bis 4, wobei die Rauschmuster (34) der einzelnen Felder (32) untereinander verschieden, insbesondere zumindest näherungsweise unkorreliert sind.

**6.** System nach einem der Ansprüche 1 bis 5, wobei die Rauschmuster (34) ein im Frequenzraum breitbandiges Rauschen aufweisen.

**7.** System nach einem der Ansprüche 1 bis 6, wobei die Rauschmuster (34) Graustufenmuster sind, und/oder wobei die Rauschmuster (34) weißes Rauschen enthalten.

**8.** System nach Anspruch 7, wobei eine Wahrscheinlichkeitsdichte von Grauwerten innerhalb der Rauschmuster (34) eine Gaußverteilung ist.

**9.** System nach einem der Ansprüche 1 bis 8, wobei die Bildauswerteeinheit (26) dazu ausgelegt ist, eine Feinbestimmung der Position des oder der von der Bilderfassungseinheit (18) aktuell erfassten Marker (16) anhand einer Erkennung der Rauschmuster (34) vorzunehmen.

**10.** System nach einem der Ansprüche 1 bis 9, wobei die Bilderfassungseinheit (18) einen Tiefpassfilter aufweist und/oder eine Einrichtung zur Defokussierung aufweist.

**11.** System nach einem der Ansprüche 1 bis 10, wobei die Rauschmuster (34) des oder der Marker (34) durch eine Tiefpassfilterung von weißem Rauschen erzeugt sind.

**12.** Verfahren zur 6D-Positionsbestimmung eines mit 6 Freiheitsgraden beweglichen Objektes (12) im Raum, mit den Schritten:

Bereitstellen eines oder mehrerer Marker (16) mit jeweils einer Fläche, die in eine Mehrzahl von einzelnen Feldern (32) unterteilt ist, wobei die Felder (32) jeweils ein statistisches Rauschmuster aufweisen,
Abspeichern eines Referenzbildes der Rauschmuster (34),
Anbringen des oder der Marker (16) an dem Objekt (12), so dass der bzw. die Marker (16) im am Objekt (12) angebrachten Zustand ortsfest bezüglich des Objekts (12) ist bzw. sind,
Erfassen eines aktuellen Bildes des oder der Marker (16) am Objekt (12) mittels mehrerer Kameras, die den oder die Marker (16) aus unterschiedlichen Blickwinkeln beobachten, und
Auswerten des aktuell erfassten Bildes des oder der Marker (16), wobei im aktuell erfassten Bild durch Vergleichen mit dem Referenzbild zumindest eines der Felder (32) des oder der Marker lokalisiert wird, um eine aktuelle Position des oder der Marker (16) im Raum zu ermitteln, wobei das Auswerten eine Grobbestimmung der Position des oder der aktuell erfassten Marker (16) anhand Erkennung von Ecken und/oder Rändern des oder der Marker (16) und/oder der Felder (32) des oder der Marker (16) aufweist.

**13.** Verfahren nach Anspruch 12, wobei das Objekt (12) ein bewegliches Maschinenteil, insbesondere ein Roboterarm (14) ist.

**14.** Verfahren nach Anspruch 12, wobei das Objekt eine bewegliche Komponente eines optischen Systems, insbesondere einer Projektionsbelichtungsanlage für die Mikrolithographie, ist.

**Claims**

**1.** System for the 6D position determination of an object (12) which is movable with 6 degrees of freedom in space, having one or more markers (16) which is/are intended to be applied to the object (12) and is/are applied to the object (12) in a stationary manner for 6D position determination, wherein the marker(s) (16) each has/have a surface (30) which is subdivided into a plurality of individual fields (32), wherein the fields (32) each have a statistical noise pattern (34), also having an image capture unit (18) which is remote from the object (12) and is arranged to capture an image (28) of the marker(s) (16), wherein the image capture unit (18) has a plurality of cameras (20) which observe the marker(s) (16) at different viewing angles, and having an image evaluation unit (26) which stores a reference image of the noise patterns (34) and is designed to locate at least one of the fields (32) in the currently captured image (28) of the marker(s) (16) by comparison with the reference image in order to determine a current position of the marker(s) (16) in space, wherein the image evaluation unit (26) is designed to coarsely determine the position of the marker(s) (16) currently captured by the image capture unit (18) by detecting corners and/or edges of the marker(s) (16) and/or of the fields (32) of the marker(s) (16).

2. System according to Claim 1, wherein the fields (32, 32a) of the marker(s) (16, 16a) are polygonal, in particular rectangular, in particular square, or wherein the fields (32b, 32c) of the marker (16b, 16c) are circular or elliptical.

3. System according to Claim 1 or 2, wherein the fields (32, 32b) of the marker(s) (16, 16b) are arranged in the form of a matrix in rows and columns.

4. System according to Claim 2, wherein the fields (32a, 32c) of the marker(s) (16a, 16c) are rotated and/or shifted relative to one another.

5. System according to one of Claims 1 to 4, wherein the noise patterns (34) of the individual fields (32) are different from one another, in particular are at least approximately uncorrelated.

6. System according to one of Claims 1 to 5, wherein the noise patterns (34) have broadband noise in the frequency domain.

7. System according to one of Claims 1 to 6, wherein the noise patterns (34) are greyscale patterns, and/or wherein the noise patterns (34) contain white noise.

8. System according to Claim 7, wherein a probability density of greyscale values within the noise patterns (34) is a Gaussian distribution.

9. System according to one of Claims 1 to 8, wherein the image evaluation unit (26) is designed to finely determine the position of the marker(s) (16) currently captured by the image capture unit (18) by detecting the noise patterns (34).

10. System according to one of Claims 1 to 9, wherein the image capture unit (18) has a low-pass filter and/or a defocussing device.

11. System according to one of Claims 1 to 10, wherein the noise patterns (34) of the marker(s) (34) are generated by subjecting white noise to low-pass filtering.

12. Method for the 6D position determination of an object (12) which is movable with 6 degrees of freedom in space, having the steps of:

providing one or more markers (16) each having a surface which is subdivided into a plurality of individual fields (32), wherein the fields (32) each have a statistical noise pattern, storing a reference image of the noise patterns (34),
applying the marker(s) (16) to the object (12) such that the marker(s) (16), in the state applied to the object (12), is/are stationary with respect to the object (12),
capturing a current image of the marker(s) (16) on the object (12) by means of a plurality of cameras which observe the marker(s) (16) from different viewing angles, and
evaluating the currently captured image of the marker(s) (16), wherein at least one of the fields (32) of the marker(s) is located in the currently captured image by comparison with the reference image in order to determine a current position of the marker(s) (16) in space, wherein the evaluation comprises coarsely determining the position of the currently captured marker(s) (16) by detecting corners and/or edges of the marker(s) (16) and/or of the fields (32) of the marker(s) (16).

13. Method according to Claim 12, wherein the object (12) is a movable machine part, in particular a robot arm (14).

14. Method according to Claim 12, wherein the object is a movable component of an optical system, in particular of a microlithographic projection exposure apparatus.

**Revendications**

1. Système de détermination de position 6D d'un objet (12) mobile avec 6 degrés de liberté dans l'espace, comprenant un ou plusieurs marqueurs (16) prévus pour être fixés sur l'objet (12), lequel ou lesquels est ou sont fixés de manière stationnaire sur l'objet (12) pour la détermination de position 6D, le ou les marqueurs (16) présentant respectivement une surface (30) divisée en une pluralité de champs individuels (32), les champs (32) présentant respectivement un motif de bruit statistique (34), comprenant en outre une unité d'acquisition d'images (18) éloignée de l'objet (12), qui est agencée pour acquérir une image (28) du ou des marqueurs (16), l'unité d'acquisition d'images (18) comportant plusieurs caméras (20) qui observent le ou les marqueurs (16) sous différents angles de vue, et comprenant une unité d'évaluation d'images (26) dans laquelle une image de référence des motifs de bruit (34) est enregistrée, et qui est conçue pour localiser au moins l'un des champs (32) dans l'image (28) actuellement acquise du ou des marqueurs (16) par comparaison avec l'image de référence, afin de déterminer une position actuelle du ou des marqueurs (16) dans l'espace, l'unité d'évaluation d'images (26) étant conçue pour effectuer une détermination grossière de la position du ou des marqueurs (16) actuellement acquis par l'unité d'acquisition d'images (18) sur la base de la reconnaissance de coins et/ou de bords du ou des marqueurs (16) et/ou des champs (32) du ou des marqueurs (16).

2. Système selon la revendication 1, dans lequel les champs (32, 32a) du ou des marqueurs (16, 16a) sont de forme polygonale, en particulier rectangulaire, en particulier carrée, ou dans lequel les champs (32b, 32c) du marqueur (16b, 16c) sont circulaires ou elliptiques.

3. Système selon la revendication 1 ou 2, dans lequel les champs (32, 32b) du ou des marqueurs (16, 16b) sont disposés en forme de matrice en lignes et en colonnes.

4. Système selon la revendication 2, dans lequel les champs (32a, 32c) du ou des marqueurs (16a, 16c) sont tournés et/ou décalés les uns par rapport aux autres.

5. Système selon l'une quelconque des revendications 1 à 4, dans lequel les motifs de bruit (34) des différents champs (32) sont différents les uns des autres, en particulier au moins approximativement non corrélés.

6. Système selon l'une quelconque des revendications 1 à 5, dans lequel les motifs de bruit (34) présentent un bruit à large bande dans l'espace fréquentiel.

7. Système selon l'une quelconque des revendications 1 à 6, dans lequel les motifs de bruit (34) sont des motifs en niveaux de gris, et/ou dans lequel les motifs de bruit (34) contiennent du bruit blanc.

8. Système selon la revendication 7, dans lequel une densité de probabilité des niveaux de gris à l'intérieur des motifs de bruit (34) est une distribution gaussienne.

9. Système selon l'une quelconque des revendications 1 à 8, dans lequel l'unité d'évaluation d'images (26) est conçue pour effectuer une détermination fine de la position du ou des marqueurs (16) actuellement acquis par l'unité d'acquisition d'images (18) sur la base d'une reconnaissance des motifs de bruit (34).

10. Système selon l'une quelconque des revendications 1 à 9, dans lequel l'unité d'acquisition d'images (18) comprend un filtre passe-bas et/ou un dispositif de défocali-sation.

11. Système selon l'une quelconque des revendications 1 à 10, dans lequel les motifs de bruit (34) du ou des marqueurs (34) sont générés par un filtrage passe-bas de bruit blanc.

12. Procédé de détermination de position 6D d'un objet (12) mobile avec 6 degrés de liberté dans l'espace, comprenant les étapes consistant à :

fournir un ou plusieurs marqueurs (16) comprenant respectivement une surface divisée en une pluralité de champs individuels (32), les champs (32) présentant respectivement un motif de bruit statistique,
stocker une image de référence des motifs de bruit (34),
fixer le ou les marqueurs (16) sur l'objet (12), de telle sorte que le ou les marqueurs (16) soient fixes par rapport à l'objet (12) dans l'état fixé sur l'objet (12), acquérir une image actuelle du ou des marqueurs (16) sur l'objet (12) au moyen de plusieurs caméras qui observent le ou les marqueurs (16) sous différents angles de vue, et
évaluer l'image actuelle acquise du ou des marqueurs (16), au moins l'un des champs (32) du ou des marqueurs étant localisé dans l'image actuelle acquise par comparaison avec l'image de référence, afin de déterminer une position actuelle du ou des marqueurs (16) dans l'espace, l'évaluation comprenant une détermination grossière de la position du ou des marqueurs (16) actuellement acquis sur la base de la reconnaissance de coins et/ou de bords du ou des marqueurs (16) et/ou des champs (32) du ou des marqueurs (16).

13. Procédé selon la revendication 12, dans lequel l'objet (12) est une partie de machine mobile, en particulier un bras de robot (14).

14. Procédé selon la revendication 12, dans lequel l'objet est un composant mobile d'un système optique, en particulier d'une installation d'éclairage par projection pour la microlithographie.

**Fig. 1**

**Fig. 2**

Fig. 3

Fig. 4

**Fig. 5**

**Fig. 6**

**Fig. 7**

**Fig. 8**

18

34

34

# Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102017113615
- DE 102009009372 A1
- EP 1473549 A1
- WO 2017072281 A1
- US 20080100622 A1
- JP H06203166 B

**In der Beschreibung aufgeführte Nicht-Patentliteratur**

- Efficient Computation of Optical Flow Using the Census Transform. *Proceedings of the 26th DAGM Symposium*, 2004, 79-86